# EUROPEAN PATENT APPLICATION

(11) **EP 4 579 301 A1**
(43) Date of publication of application: **02.07.2025**
(21) Application number: 23899275.4
(22) Date of filing: 07.04.2023
(51) Int. Cl.: G02B 6/42

(54) **PANEL-TYPE ONU**

(30) Priority: 09.12.2022 CN 202223325956 U
(71) Applicant: Huawei Technologies Co., Ltd., Shenzhen, Guangdong 518129 (CN)
(72) Inventor: XIANG, Jing, Shenzhen, Guangdong 518129 (CN); WEI, Qiwen, Shenzhen, Guangdong 518129 (CN)
(74) Representative: Grünecker Patent- und Rechtsanwälte PartG mbB
(86) International application number: PCT/CN2023/086764
(87) International publication number: WO 2024/119681

(57) **Abstract**

A panel ONU is provided, including an inner board and a bottom housing, where an accommodation cavity is formed between the inner board and the bottom housing, a slot is disposed on a side that is of the bottom housing and that is opposite to the inner board, a slot depth direction of the slot is inclined to one side of the bottom housing, and the slot is configured to accommodate a connector of a pigtail. When used in an 86-type installation box, the panel ONU may support a pigtail with a long tail ferrule, an on-site terminated optical fiber terminal, or the like, to help improve construction efficiency and a success rate.

## Description

This application claims priority to Chinese Patent Application No. 202223325956.8, filed with the China National Intellectual Property Administration on December 9, 2022 and entitled "ONU PANEL, ONU DEVICE, AND FTTR NETWORKING SYSTEM", which is incorporated herein by reference in its entirety.

### TECHNICAL FIELD

This application relates to the field of optical network technologies, and in particular, to a panel ONU.

### BACKGROUND

An FTTR (Fiber To The Room, fiber to the room) system replaces a network cable with an optical fiber, to enable the optical fiber to change from "fiber to the home" to "fiber to the room". In this way, a high-quality network can be expanded to all corners of the room, to effectively improve user experience.

In an FTTR networking system, a primary gateway is an ONT (Optical Network Terminal, optical network unit), and the ONT is connected to an OLT (Optical Line Termination, optical line termination) for networking. The ONT may provide a downstream optical interface to connect to an ONU (Optical Network Unit, optical network unit), and the ONU forms a secondary gateway.

In the FTTR networking system, a neat networking manner is to use a secondary gateway of a junction box (86 mm) panel ONU for networking. An existing junction box (86 mm) panel ONU uses a BOSA (Bi-Directional Optical Sub-Assembly, bi-directional optical sub-assembly) solution.

In addition to the foregoing FTTR networking system, the panel ONU can further be used in other application scenarios.

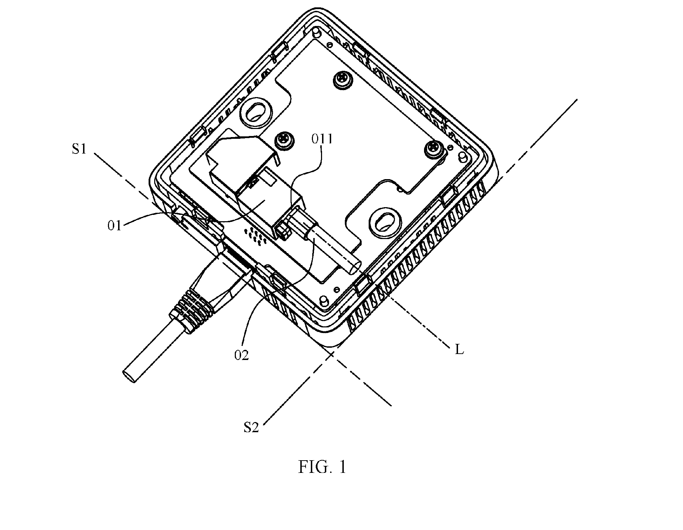

As shown in FIG. 1, in the existing panel ONU, an axis line L of a plug interface 011 for inserting a pigtail 02 on a flange of a BOSA module 01 is parallel to a direction of a first side S1 of the panel, the axis line L of the plug interface 011 is perpendicular to a direction of a second side S2 of the panel, and the first side and the second side are two adjacent sides of the panel. It can be seen from FIG. 1 that a distance between the plug interface 011 and the second side is small. That is, space reserved for the pigtail 02 is limited. Therefore, neither a common pigtail nor an on-site terminated optical fiber terminal can be conveniently disposed in space of the junction box (86 mm) and coiled. Consequently, a potential risk of an optical fiber fault is increased and construction efficiency is reduced.

### SUMMARY

This application provides a panel ONU. Through structural optimization, the panel ONU has large arrangement space for a pigtail. When used in an 86-type installation box, the panel ONU can support a pigtail with a long tail ferrule, an on-site terminated optical fiber terminal, or the like, to help improve construction efficiency and a success rate.

An embodiment of this application provides a panel ONU, including an inner board and a bottom housing, where an accommodation cavity is formed between the inner board and the bottom housing, a slot is disposed on a side that is of the bottom housing and that is opposite to the inner board, a slot depth direction of the slot is inclined to one side of the bottom housing, and the slot is configured to accommodate a connector of a pigtail.

By using this solution, space reserved for the pigtail is increased, so that the panel ONU is convenient to be used in the 86-type installation box, and can support the pigtail with a long tail ferrule, the on-site terminated optical fiber terminal, or the like, to help improve efficiency and a success rate of pipe routing and construction on site.

In a possible implementation, a slot bottom wall of the slot has an opening for inserting the pigtail, and the opening is located in a middle area of the bottom housing. In this way, the arrangement space of the pigtail can be increased as much as possible.

In a possible implementation, the panel ONU includes a BOSA module, the BOSA module is located in the accommodation cavity, the BOSA module has a plug interface for inserting the pigtail, and the plug interface corresponds to the position of the opening.

In a possible implementation, the BOSA module has a limiting hole, so that a flat cable of the inserted pigtail is perpendicular to the inner board.

In a possible implementation, the plug interface is configured as that the inserted pigtail is inclined in a direction away from the inner board. This facilitates a coiling operation of the pigtail and prevents the pigtail from being damaged during the coiling.

In a possible implementation, the panel ONU further includes a first circuit board, where the first circuit board is located in the accommodation cavity, the BOSA module is electrically connected to the first circuit board, the BOSA module is located on a side that is of the first circuit board and that faces the bottom housing, and there is a specified distance between the plug interface of the BOSA module and the first circuit board, to avoid an electronic component on the first circuit board.

For example, the panel ONU further includes a second circuit board, where the second circuit board is located in the accommodation cavity, the second circuit board is disposed perpendicular to the first circuit board, and the BOSA module is installed on the second circuit board.

In this way, a distance between the pigtail and the first circuit board is increased, and the electronic components are arranged on the first circuit board.

In a possible implementation, the bottom housing includes a rectangular structure adapted to the inner board and a convex structure extending from the rectangular structure in a direction away from the inner board, and the slot is located in the convex structure.

In a possible implementation, several fiber coiling slots are disposed on the bottom housing, and the several fiber coiling slots are arranged around the slot. In this way, a redundant part of an optical fiber of the pigtail is conveniently coiled up and stored, to avoid that assembly of the panel ONU and the installation box is affected.

In a possible implementation, a cable holder is disposed on the bottom housing, and the cable holder is configured to limit a fiber coiling position of the pigtail, so that a fiber coiling radius of the pigtail is at a specified value. In this way, it can be avoided that the fiber coiling radius is excessively small to affect transmission effect of the optical fiber, and it can also be avoided that the fiber coiling radius is excessively large to be assembled with an outer box of a limited size.

In a possible implementation, the cable holder has at least one bending surface, configured to adhere to a coiled optical fiber. This has a cushioning effect on the fiber coiling of the pigtail and prevents the pigtail from being damaged.

In a possible implementation, the inner board and the bottom housing match an 86-type installation box. The panel ONU can be conveniently disposed in the 86-type installation box and implement fiber coiling, to reduce a potential risk of an optical fiber fault.

In a possible implementation, the panel ONU is configured to form a secondary gateway in an FTTR networking system. The panel ONU can be used in the FTTR networking system, to enable the FTTR networking system to have a neat networking manner.

### BRIEF DESCRIPTION OF DRAWINGS

FIG. 1 is a schematic diagram of a structure of an existing panel ONU;
FIG. 2 is a schematic diagram of a structure of a panel ONU according to an embodiment of this application;
FIG. 3 is a partially enlarged diagram of a part A in FIG. 2;
FIG. 4 is a schematic diagram of a structure of the panel ONU shown in FIG. 2 when a bottom housing is hidden;
FIG. 5 is a simple schematic diagram of relative positions of a pigtail and a first circuit board in a specific application;
FIG. 6 is a schematic diagram of a structure of a panel ONU according to another embodiment of this application;
FIG. 7 is a partially enlarged diagram of a part B in FIG. 6;
FIG. 8 is a schematic diagram of a structure of the panel ONU shown in FIG. 6 from another perspective; and
FIG. 9 is a schematic diagram of a structure of an FTTR networking system.

### DESCRIPTION OF EMBODIMENTS

An embodiment of this application provides a panel ONU (Optical Network Unit, optical network unit). A structure of the panel ONU is optimized, so that the panel ONU has large arrangement space for a pigtail, is convenient to be used in an 86-type installation box, and supports a pigtail with a long tail ferrule, an on-site terminated optical fiber terminal, or the like, to help improve efficiency and a success rate of pipe routing and construction on site.

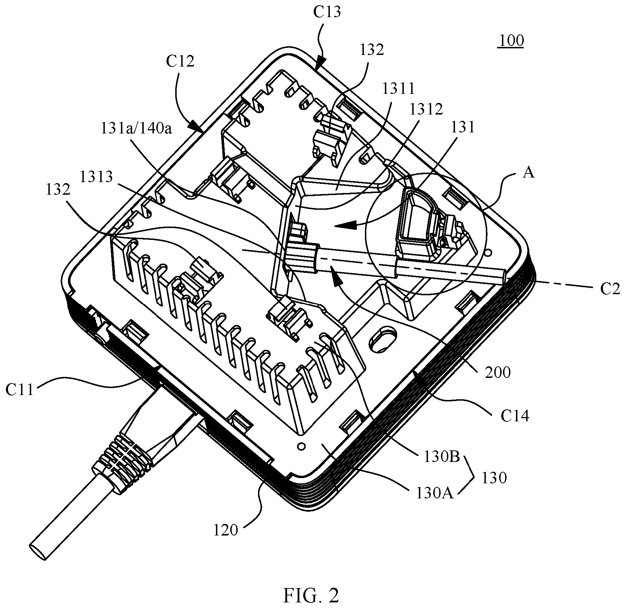

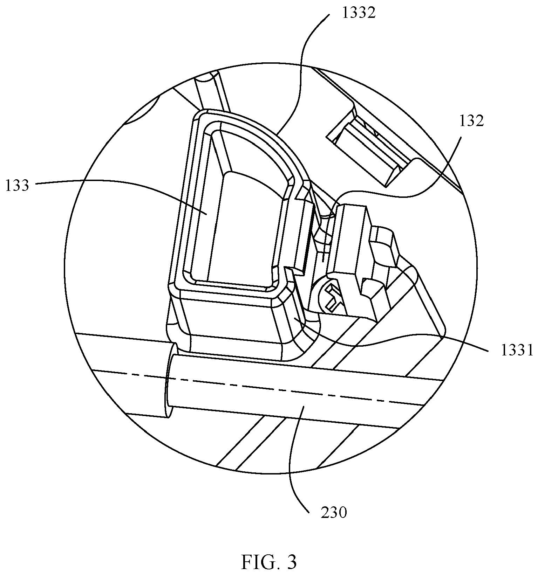

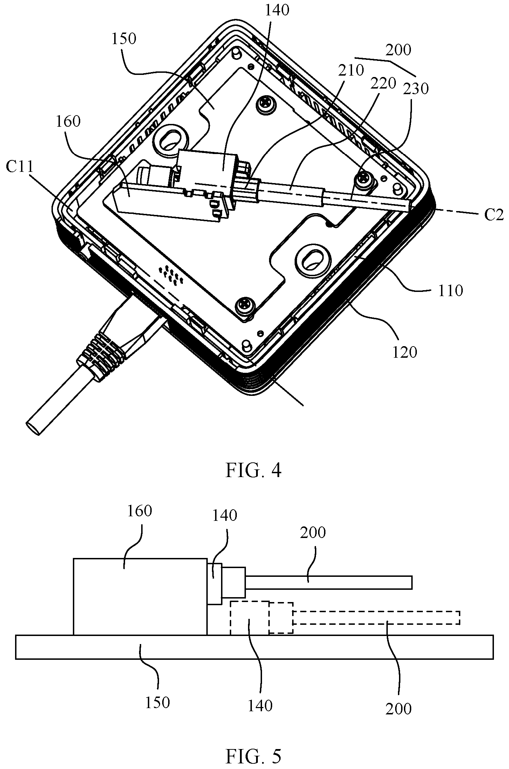

Refer to FIG. 2 to FIG. 4. FIG. 2 is a schematic diagram of a structure of a panel ONU according to an embodiment of this application, FIG. 3 is a partially enlarged diagram of a part A in FIG. 2, and FIG. 4 is a schematic diagram of a structure of the panel ONU shown in FIG. 2 when a bottom housing is hidden.

As customer premise equipment at an access end, a panel ONU 100 may be configured to: provide interfaces for telephone, data communication, image, and the like for a user. A pigtail 200 is inserted into the panel ONU 100 to form an optical data transmission path.

In this embodiment, the panel ONU 100 includes an inner board 110 and a bottom housing 130. An accommodation cavity is formed between the inner board 110 and the bottom housing 130, and the accommodation cavity may be configured to accommodate an electronic component and another component that are of the panel ONU 100. A slot 131 is disposed on a side that is of the bottom housing 130 and that is opposite to the inner board 110. A slot depth direction of the slot 131 is inclined to one side of the bottom housing 130. The slot 131 is configured to: accommodate at least a part of a structure of the pigtail 200, for example, a connector 210 of the pigtail 200. The foregoing structural arrangement of the bottom housing 130 provides large arrangement space for the pigtail 200.

The pigtail 200 includes the connector 210 and a cable. In this embodiment, the cable is specifically an optical fiber 230, and the connector 210 is connected to the optical fiber 230. A tail ferrule 220 may further be disposed on the pigtail 200. The tail ferrule 220 is sheathed on the optical fiber 230, and is connected to the connector 210, to protect the optical fiber 230 at a position close to the connector 210.

In a solution shown in the figure, the slot 131 of the bottom housing 130 includes a first slot side wall 1311, a slot bottom wall 1312, and a second slot side wall 1313, and the first slot side wall 1311 and the second slot side wall 1313 are disposed opposite to each other. In this case, the slot depth direction of the slot 131 may be understood as a general extension direction of the first slot side wall 1311 or the second slot side wall 1313, or a direction perpendicular to the slot bottom wall 1312.

In a specific application, the slot bottom wall 1312 of the slot 131 has an opening 131a, and the opening 131a is configured to insert the pigtail 200. After the pigtail 200 is inserted into the panel ONU 100, the connector 210 of the pigtail 200 is located in the slot 131. Depending on a depth of the slot 131, at least a part of the tail ferrule 220 of the pigtail 200 may also be located in the slot 131.

In a specific application, at least one of the inner board 110 and the bottom housing 130 is of a slot-shaped structure, so that the foregoing accommodation cavity is formed between the inner board 110 and the bottom housing 130.

The inner board 110 may be of a slot-type structure with a notch facing the bottom housing 130, and has installation space inside the inner board 110.

In the solution shown in the figure, the bottom housing 130 may include a rectangular structure 130A adapted to a shape of the inner board 110 and a convex structure 130B extending from the rectangular structure 130A in a direction away from the inner board 110. The rectangular structure 130A may be of a plate-shaped structure, and a part of the plate-shaped structure protrudes in a direction away from the inner board 110 to form the convex structure 130B. In this way, the convex structure 130B has open installation space, and after the inner board 110 and the rectangular structure 130A of the bottom housing 130 are connected, the installation space of the inner board 110 and the installation space of the convex structure 130B may form the foregoing accommodation cavity together.

In another embodiment, the rectangular structure 130A of the bottom housing 130 may alternatively be a slot-type structure having a rectangular slot, and the inner board 110 may alternatively be of a rectangular plate-shaped structure, and is only configured to seal a notch that is of the bottom housing 130 and that faces the inner board 110. In another embodiment, the entire bottom housing 130 may be of a regular-shaped slot-type structure.

In an example shown in the figure, the slot 131 is formed on the convex structure 130B of the bottom housing 130, the rectangular structure 130A of the bottom housing 130 is a part connected to the inner board 110, and the rectangular structure 130A has four sides, where the four sides are respectively a first side C11, a second side C12, a third side C13, and a fourth side C14, the first side C11 is opposite to the third side C13, and the second side C12 is opposite to the fourth side C14.

In this embodiment, the first side C11 is used as a reference side of the slot depth direction of the slot 131. It can be learned from FIG. 2 that the slot depth direction of the slot 131 is inclined to the first side C11, the slot bottom wall 1312 of the slot 131 approximately faces a part where the third side C13 and the fourth side C14 intersect, and after the pigtail 200 is inserted into the opening 131a of the slot bottom wall 1312, an axial direction C2 of the pigtail 200 is inclined to the first side C11. In comparison with the existing solution shown in FIG. 1, this solution is equivalent to rotating the pigtail 200 by an angle to insert the pigtail 200 into the bottom housing 130. In this way, space between an insertion position of the pigtail 200 and an edge of the bottom housing 130 is increased, and the arrangement space reserved for the pigtail 200 is increased, so that the panel ONU 100 provided in this embodiment can support a pigtail 200 with a long tail ferrule 220, an on-site terminated optical fiber terminal, or the like, and is applicable to an 86-type installation box, to improve on-site construction efficiency and a success rate.

In a specific application, the opening 131a of the slot 131 is disposed in a middle area of the bottom housing 130. In this way, the arrangement space of the pigtail 200 on the panel ONU 100 can be increased as much as possible.

In the example shown in FIG. 2, the slot 131 has the first slot side wall 1311, the second slot side wall 1313, and one slot bottom wall 1312. In another embodiment, the slot 131 may alternatively have only two slot walls. Based on the structure of the bottom housing 130 shown in FIG. 2, for example, the slot bottom wall 1312 of the slot 131 may extend through the convex structure 130B in a direction of the first side C11. In this case, the slot 131 has only the first slot side wall 1311 and the slot bottom wall 1312, and the slot depth direction of the slot 131 may be an extension direction of the first slot side wall 1311, or may be an extension direction of the slot bottom wall 1312. Correspondingly, the opening 131a for inserting the pigtail 200 may be disposed on the slot bottom wall 1312, or may be disposed on the first slot side wall 1311. When the opening 131a is disposed on the slot bottom wall 1312, the arrangement space of the pigtail 200 in the bottom housing 130 is consistent with that shown in FIG. 2. When the opening 131a is disposed on the first slot side wall 1311, an axial direction of the inserted pigtail 200 is approximately consistent with the extension direction of the slot bottom wall 1312. In this case, the third side C13 of the bottom housing 130 may be determined as the reference side. That is, the axial direction of the inserted pigtail 200 is inclined to the third side C13, and the arrangement space of the pigtail 200 on the bottom housing 130 can also be increased.

In a specific application, after the pigtail 200 is inserted into the panel ONU 100, an included angle between the axial direction C2 of the pigtail 200 and the first side C11 that is used as the reference side may be selected within a range of 20° to 70°, and may further be selected in a range of 35° to 40°. During actual disposition, the angle between C11 and C2 may be adjusted based on a specific application requirement.

In this embodiment, a BOSA (Bi-Directional Optical Sub-Assembly, bi-directional optical sub-assembly) module 140 is disposed in the accommodation cavity of the panel ONU 100. The BOSA module 140 has a plug interface 140a for inserting the pigtail 200, and a position of the opening 131a of the bottom housing 130 corresponds to a position of the plug interface 140a, so that the connector 210 of the pigtail 200 passes through the opening 131a to be connected to the plug interface 140a. The axial direction C2 of the pigtail 200 shown in FIG. 2 may also be understood as an axial direction of the plug interface 140a. In other words, the axial direction of the plug interface 140a determines the extension direction of the inserted pigtail 200.

In a specific application, several fiber coiling slots 132 are disposed on the bottom housing 130, and the several fiber coiling slots 132 are arranged around the slot 131. In this way, a redundant part of the optical fiber 230 of the pigtail 200 is conveniently coiled up. The fiber coiling slot 132 is configured to limit relative positions of the optical fiber 230 and the bottom housing 130. A quantity of fiber coiling slots 132 may be set based on a requirement, and is generally greater than two. Intervals between several fiber coiling slots 132 may be set as evenly as possible, to prevent the optical fiber 230 from being damaged due to uneven stress.

In a specific application, a cable holder 133 is further disposed on the bottom housing 130, and the cable holder 133 is configured to limit a fiber coiling position of the pigtail 200, so that a fiber coiling radius of the pigtail 200 is at a specified value. This ensures that during construction, the fiber coiling radius is not excessively small to affect transmission effect of the optical fiber 230, and further ensures that the fiber coiling radius is not excessively large to cause an assembly failure.

With reference to FIG. 2 and FIG. 3, the cable holder 133 is disposed at a position adjacent to the notch of the slot 131, and the disposing position of the cable holder 133 determines the radius of a coiled fiber. From a viewing angle shown in FIG. 2, when the fiber is coiled, the optical fiber 230 of the pigtail 200 is bent in an anticlockwise direction, and the optical fiber 230 is coiled adhering to the cable holder 133, and passes through the fiber coiling slot 132 during the coiling process to implement positioning.

During actual disposition, the cable holder 133 and one of the several fiber coiling slots 132 may be disposed adjacently, or the cable holder 133 and one of the several fiber coiling slots 132 may be disposed as an integral structure as shown in FIG. 3. In this way, when the fiber is coiled, and when the optical fiber 230 is coiled adhering to the cable holder 133, a position may be limited by using a fiber coiling slot 132 adjacent to the cable holder 133, to help ensure the fiber coiling radius.

In another embodiment, the cable holder 133 and the fiber coiling slot 132 adjacent to the cable holder 133 may alternatively be of independent structures.

During specific disposition, the cable holder 133 has at least one bending surface, and a bending direction of the bending surface is consistent with a coiling path of the optical fiber 230. In this way, when the optical fiber 230 is coiled, the optical fiber 230 can adhere to the bending surface of the cable holder 133. When the bending surface assists the optical fiber 230 in coiling, a contact area between the optical fiber 230 and the cable holder 133 can be increased, to prevent an adverse phenomenon such as bending when the optical fiber 230 is coiled.

In an example shown in the figure, the cable holder 133 has two bending surfaces, and the two bending surfaces are respectively a first bending surface 1331 and a second bending surface 1332. From a viewing angle shown in the figure, the optical fiber 230 is coiled in an anticlockwise direction, first adheres to the first bending surface 1331, and then adheres to the second bending surface 1332. The fiber coiling slot 132 adjacent to the cable holder 133 is located between the first bending surface 1331 and the second bending surface 1332. To be specific, when the optical fiber 230 is coiled, the optical fiber 230 first adheres to the first bending surface 1331, then passes through the fiber coiling slot 132 adjacent to the cable holder 133, to adhere to the second bending surface 1332, and subsequently passes through all fiber coiling slots 132 on the coiling path in sequence.

In the solution shown in the figure, curvatures and lengths of the first bending surface 1331 and the second bending surface 1332 are different. In an actual application, a quantity and an arrangement of bending surfaces of the cable holder 133, a parameter of each bending surface, and the like may be adjusted based on a fiber coiling requirement.

In this embodiment, a first circuit board 150 is disposed in the accommodation cavity of the panel ONU 100, the BOSA module 140 is electrically connected to the first circuit board 150, the BOSA module 140 is located on a side that is of the first circuit board 150 and that faces the bottom housing 130, and there may be a specified distance between the BOSA module 140 and the first circuit board 150, to avoid an electronic component on the first circuit board 150. Specifically, there is the foregoing specified distance between the plug interface 140a of the BOSA module 140 and the first circuit board 150, so that an arrangement of the electronic components on the first circuit board 150 corresponding to a position of the pigtail 200 is not affected because of the insertion of the pigtail 200, to improve utilization space of the first circuit board 150.

As shown in FIG. 4, during specific implementation, a board surface of the first circuit board 150 is perpendicular to a connecting direction between the inner board 110 and the bottom housing 130, so that the first circuit board 150 can be conveniently disposed in the accommodation cavity between the inner board 110 and the bottom housing 130. A second circuit board 160 may further be disposed, and the second circuit board 160 is disposed perpendicular to the first circuit board 150. The BOSA module 140 is installed on the second circuit board 160. In this way, a distance between the BOSA module 140 and the first circuit board 150 may be increased. With reference to FIG. 5, a height position of the BOSA module 140 on the second circuit board 160 may be adjusted, to adjust the distance between the BOSA module 140 and the first circuit board 150, so that there is sufficient space between the pigtail 200 inserted on the BOSA module 140 and the first circuit board 150 for disposing another electronic component, to avoid that space below the pigtail 200 (near a direction of the first circuit board 150) is wasted because the space is insufficient and it is difficult to arrange another electronic component.

The first circuit board 150 may be set in different shapes such as a rectangle or an I-shaped shape, and the second circuit board 160 and the first circuit board 150 may be physically connected by soldering or in another manner.

In a specific application, the pigtail 200 may be inclined in a direction away from the first circuit board 150, to further increase space between the optical fiber 230 and the first circuit board 150.

Specifically, the pigtail 200 may be inclined in the direction away from the first circuit board 150 in the following manners.

First, the BOSA module 140 is disposed inclined to the second circuit board 160, so that the plug interface 140a of the BOSA module 140 is inclined in the direction away from the first circuit board 150.

Second, when the pigtail 200 has the tail ferrule 220, the tail ferrule 220 of the pigtail 200 may be disposed inclined in the direction away from the first circuit board 150, so that a fiber outlet of the tail ferrule 220 is inclined in the direction away from the first circuit board 150. When the pigtail 200 does not have the tail ferrule 220, a part that is of the optical fiber 230 and that is close to the connector 210 may be disposed inclined in the direction away from the first circuit board 150.

The inclining angle in each of the foregoing manners may be set small, to avoid that an excessively large inclining angle affects a size of the panel ONU 100 in a thickness direction.

In addition to the foregoing effect, the solution of increasing the distance between the pigtail 200 and the first circuit board 150 further facilitates the fiber coiling operation. After the distance between the pigtail 200 and the first circuit board 150 is increased, the pigtail 200 is close to a side of the bottom housing 130. In this way, a height difference between the pigtail 200 and the fiber coiling slot 132 on the bottom housing 130 is reduced, and the pigtail 200 is closer to the fiber coiling slot 132. During the fiber coiling, torsion on the optical fiber 230 is reduced, to help protect the optical fiber 230.

In another embodiment, the second circuit board 160 may not be disposed, and the BOSA module 140 is directly installed on the first circuit board 150. In this state, after the pigtail 200 is inserted into the BOSA module 140, as shown by a dotted line in FIG. 5, the distance between the pigtail 200 and the first circuit board 150 is small, and an additional electronic component cannot be disposed in an area that is on the first circuit board 150 and that corresponds to the pigtail 200.

Herein, for ease of comparison and schematic description, that the BOSA module 140 is connected to the first circuit board 150 by using the second circuit board 160 and that the BOSA module 140 is directly connected to the first circuit board 150 are shown in a same diagram. The BOSA modules 140 and the pigtails 200 in the two solutions are distinguished by using a dotted line and a solid line.

In an actual application, the inner board 110 and the bottom housing 130 may be fastened by using a fastener such as a screw, or may be clamped by using a buckle or the like, and the inner board 110 has an installation hole or a connecting piece such as a screw. To shield these structures, a panel 120 is further disposed on the panel ONU 100, so that a user-facing side of the panel ONU 100 after installation is ordered or neat, and the panel 120 is configured to shield an installation structure on the inner board 110. Specifically, a shape of the panel 120 may be consistent with that of the inner board 110, or may be another shape, for example, a circular shape or an oval shape corresponding to the screw or the installation hole, provided that the installation structure on the inner board 110 can be shielded.

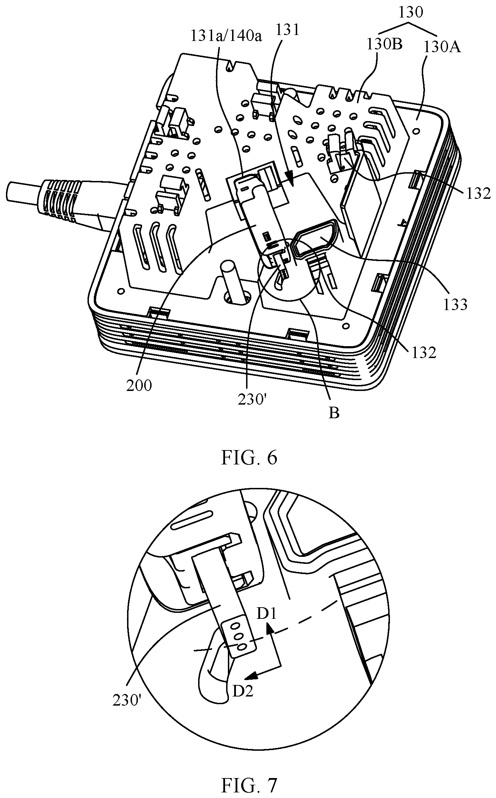

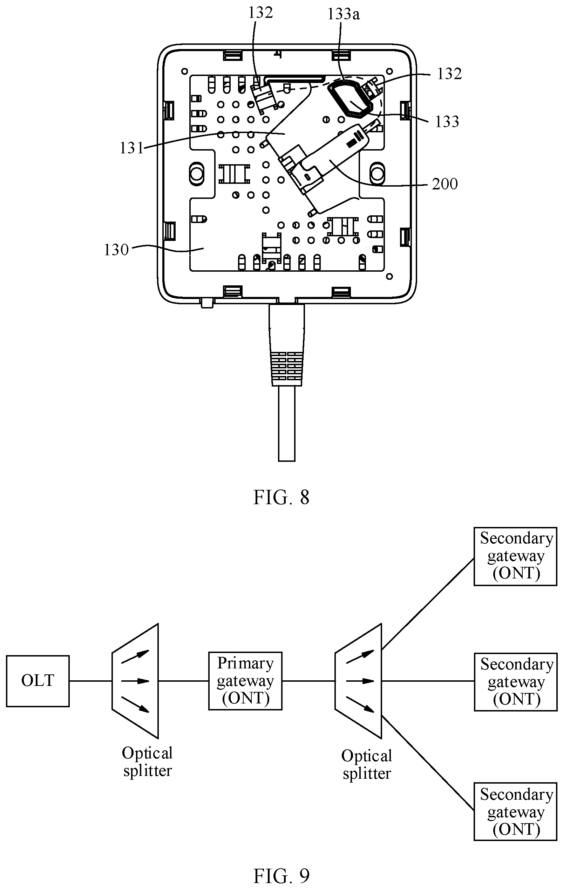

Refer to FIG. 6 to FIG. 8. FIG. 6 and FIG. 8 respectively show schematic diagrams of structures of a panel ONU from two viewing angles according to another embodiment, and FIG. 7 is a partially enlarged diagram of a part B in FIG. 6.

In this embodiment, basic structural composition and an arrangement form of the panel ONU are similar to those of the panel ONU 100 shown in FIG. 2 to FIG. 4. To clearly show a difference and a relationship between this solution and the solution shown in FIG. 2 to FIG. 4, same functional components or structures in the figures are indicated by same marks. The following describes only differences between the two solutions.

In this embodiment, a cable of a pigtail 200 is a flat cable. Herein, a photoelectric composite cable 230' is used as an example for description, and the flat cable may alternatively be an optical fiber. The photoelectric composite cable 230' is of a flat structure, and a cross section of the photoelectric composite cable 230' is approximately rectangular with rounded corners. The photoelectric composite cable 230' has a first thickness and a second thickness, where the first thickness is greater than the second thickness. Herein, the first thickness and the second thickness may be understood as a length and a width of the rectangular cross section of the photoelectric composite cable 230'. As shown in FIG. 7, a direction of the first thickness is a direction indicated by D1, and a direction of the second thickness is a direction indicated by D2.

After an opening 131a of a slot 131 of a bottom housing 130 and a plug interface 140a of a BOSA module are configured to insert the pigtail 200, the first thickness direction D1 of the photoelectric composite cable 230' of the pigtail 200 is a connecting direction between the bottom housing 130 and an inner board 110. In other words, the first thickness direction D1 of the photoelectric composite cable 230' is perpendicular to the inner board 110. This contributes to smoothness of coiling a redundant photoelectric composite cable 230' on the bottom housing 130, and avoids affecting a communication effect of the photoelectric composite cable 230'. Refer to FIG. 7. A dotted line in FIG. 7 shows a general path of coiling the photoelectric composite cable 230'. When the photoelectric composite cable 230' is coiled, the first thickness direction D1 of the photoelectric composite cable 230' is approximately perpendicular to a coiling direction. Because the second thickness of the photoelectric composite cable 230' is small, when the photoelectric composite cable 230' is coiled, damage to the photoelectric composite cable 230' can be reduced.

Specifically, an insertion direction of the pigtail 200 may be limited by disposing a limiting structure (for example, in a form of a limiting hole) between the opening 131a and a connector 210 of the pigtail 200 or between a connector 210 and the plug interface 140a, to ensure that the first thickness direction D1 of the photoelectric composite cable 230' of the inserted pigtail 200 is perpendicular to the inner board 110. In comparison with a position of the BOSA module in the existing panel ONU, in this embodiment, the internal BOSA module is turned by 90 degrees by using the insertion direction of the pigtail 200 as an axis. In this way, after the pigtail 200 is inserted into the BOSA module based on the foregoing limiting structure, the first thickness direction D1 of the photoelectric composite cable 230' may be perpendicular to the inner board 110, and a limiting hole may be disposed on the BOSA module to limit the insertion direction of the pigtail 200.

In this solution, a fiber coiling slot 132 and a cable holder 133 are also disposed on the bottom housing 130. The cable holder 133 has a bending surface 133a, and the bending surface 133a is configured to adhere to the coiled photoelectric composite cable 230', to limit a coiling radius of the photoelectric composite cable 230'. A part of the coiling path of the photoelectric composite cable 230' is illustrated by a dotted line in FIG. 8, to illustrate a relationship between the coiling path and the cable holder 133 and the fiber coiling slot 132.

During specific disposition, a height of the cable holder 133 is not less than the first thickness of the photoelectric composite cable 230', and the height of the cable holder 133 may be set larger than the first thickness of the photoelectric composite cable 230', to improve a cushioning effect when the photoelectric composite cable 230' is coiled.

During specific disposition, the bending surface 133a of the cable holder 133 may be set as an arc surface, and may have a specific length in the coiling direction. That is, the bending surface 133a has a specific arc length (for example, may be 1 to 2 cm), to increase a contact area between the photoelectric composite cable 230' and the cable holder 133, improve a cushioning effect of the coiling, and prevent the photoelectric composite cable 230' from being damaged.

In an application scenario, the panel ONU 100 may be applicable to an 86-type installation box, and the inner board 110 and the bottom housing 130 of the panel ONU 100 may be designed to match the 86-type installation box.

In an application scenario, the panel ONU 100 may be configured to form an FTTR networking system, and be used as a secondary gateway of the FTTR networking system. An FTTR (Fiber To The Room, fiber to the room) all-optical home network solution may extend a high-quality network to all corners of the room, to effectively improve user experience. In an actual application, an FTTR networking system may be understood with reference to FIG. 9. An OLT (Optical Line Termination, optical line termination) is connected to a primary gateway by using an optical fiber, and the primary gateway may be separately connected to a plurality of secondary gateways by using an optical splitter, where at least one of the secondary gateways may be networked by using the foregoing panel ONU 100.

The panel ONU 100 is not only applied to the FTTR networking system, but also may be used as a gateway of another system.

Specific examples are used in this specification to describe the principles and implementations of this application. The descriptions of the foregoing embodiments are merely used to help understand the methods and the core idea of this application. It should be noted that a person of ordinary skill in the art may further make some improvements and modifications to this application without departing from the principles of this application, and these improvements and modifications shall fall within the protection scope of the claims of this application.

## Claims

1. A panel ONU, comprising an inner board and a bottom housing, wherein an accommodation cavity is formed between the inner board and the bottom housing, a slot is disposed on a side that is of the bottom housing and that is opposite to the inner board, a slot depth direction of the slot is inclined to one side of the bottom housing, and the slot is configured to accommodate a connector of a pigtail.

2. The panel ONU according to claim 1, wherein a slot bottom wall of the slot comprises an opening for inserting the pigtail, and the opening is located in a middle area of the bottom housing.

3. The panel ONU according to claim 2, wherein the panel ONU further comprises a BOSA module, the BOSA module is located in the accommodation cavity, the BOSA module comprises a plug interface for inserting the pigtail, and a position of the plug interface corresponds to the position of the opening.

4. The panel ONU according to claim 3, wherein the BOSA module comprises a limiting hole, so that a flat cable of the inserted pigtail is perpendicular to the inner board.

5. The panel ONU according to claim 3, wherein the plug interface is configured as that the inserted pigtail is inclined in a direction away from the inner board.

6. The panel ONU according to claim 3, wherein the panel ONU further comprises a first circuit board, the first circuit board is located in the accommodation cavity, the BOSA module is electrically connected to the first circuit board, the BOSA module is located on a side that is of the first circuit board and that faces the bottom housing, and there is a specified distance between the plug interface of the BOSA module and the first circuit board, to avoid an electronic component on the first circuit board.

7. The panel ONU according to claim 6, wherein the panel ONU further comprises a second circuit board, the second circuit board is located in the accommodation cavity, the second circuit board is disposed perpendicular to the first circuit board, and the BOSA module is installed on the second circuit board.

8. The panel ONU according to any one of claims 1 to 7, wherein the bottom housing comprises a rectangular structure adapted to the inner board and a convex structure extending from the rectangular structure in a direction away from the inner board, and the slot is located in the convex structure.

9. The panel ONU according to any one of claims 1 to 7, wherein several fiber coiling slots are disposed on the bottom housing, and the several fiber coiling slots are arranged around the slot.

10. The panel ONU according to any one of claims 1 to 7, wherein a cable holder is disposed on the bottom housing, and the cable holder is configured to limit a fiber coiling position of the pigtail, so that a fiber coiling radius of the pigtail is at a specified value.

11. The panel ONU according to claim 10, wherein the cable holder comprises at least one bending surface, configured to adhere to a coiled optical fiber.

12. The panel ONU according to any one of claims 1 to 7, wherein the inner board and the bottom housing match an 86-type installation box.

13. The panel ONU according to any one of claims 1 to 7, wherein the panel ONU is configured to form a secondary gateway in an FTTR networking system.
